# EUROPEAN PATENT APPLICATION

(11) **EP 1 863 299 A1**
(43) Date of publication of application: **05.12.2007**
(21) Application number: 07251877.2
(22) Date of filing: 04.05.2007
(51) Int. Cl.: H04Q 7/22, H04Q 7/38, H04M 3/436, H04L 12/58

(54) **Routing of SMS messages to roaming users**

(30) Priority: 05.05.2006 GB 0608940; 25.08.2006 GB 0616881
(71) Applicant: EServGlobal UK Limited, London EC4Y ODX (GB)
(72) Inventor: Heaton, Graham Empower Interactive Group Ltd., London W4 5YB (GB); Cornell, Keith Empower Interactive Group Ltd., London W4 5YB (GB); Silva, Pedro Empower Interactive Group Ltd., London W4 5YB (GB)
(74) Representative: Kazi, Ilya

(57) **Abstract**

A method is described for providing routing information for routing a message to a destination mobile entity having an associated base network, wherein the destination mobile entity may roam to a foreign network. The method comprises: receiving a request for routing information at a component in the base network; determining whether the destination mobile entity is roaming to a foreign network; if the destination mobile entity is roaming to a foreign network, providing routing information in response to the request for routing the message to a component in the base network.

## Description

The present application relates the field of message routing and, in particular, to the routing of messages, such as Short Message Service (SMS) messages between components in a mobile telecommunications network.

As described in more detail below, in existing systems, if a user is roaming away from their own, home network when a message is sent to the user, the Home Location Register (HLR) of the home network supplies routing information to enable the message to be transmitted to the user device. On receipt of the routing information, the message is transmitted directly to the user device without passing through the home network of the user.

Hence the home network of a roaming user does not have any control over the delivery of messages to those users.

According to one aspect, there is provided a method of providing routing information for routing a message to a destination mobile entity having an associated base network, wherein the destination mobile entity may roam to a foreign network, the method comprising:
receiving a request for routing information at a component in the base network;
determining whether the destination mobile entity is roaming to a foreign network;
if the destination mobile entity is roaming to a foreign network, providing routing information in response to the request for routing the message to a component in the base network.

Hence the routing information supplied may depend on whether the user is roaming in a foreign network, or is located in the base network. If the user is roaming, the present method may enable the message to be sent to the user via the base network. This may allow the base network operator control over how and when the message is sent to the user and over the charging strategy adopted for the message.

In the event that the user is located within the base network, the routing information supplied may enable the message to be routed directly to the user. Such a message will pass through the base network so the base network operator may apply any routing or charging rules as required at this point. In one embodiment, a Value Added Services (VAS) component may intercept messages passing through the base network.

The base network may comprise the home network of the user of the destination mobile entity.

In some embodiments, the base network may not be the network to which the user is directly subscribed, but may be an underlying network for a Mobile Virtual Network Operator, as described in more detail below. In this situation, the user may consider the network of the MVNO to be their home network. However, the base network is the network having the infrastructure upon which the MVNO lies.

In some embodiments, the foreign network may be a separate network to the base network of the mobile operator used by the destination mobile entity. For example, a customer of Mobile Operator Network A may roam to the network of Mobile Operator B if there is no coverage of Network A available in a particular area (for example, if the customer is abroad).

In other embodiments, however, the foreign network may be a network of a Mobile Virtual Network Operator (MVNO). MVNOs implement mobile networks based on the physical infrastructure of another, underlying mobile operator. In such a situation, the base network of a mobile entity may be the network of the underlying mobile operator and the foreign network may be that of the MVNO. In this case, a user does not access the base network directly, but from a technical point of view, is always considered to be "roaming" in the "foreign" network of the MVNO.

Preferably, the method further comprises processing the message at the component in the base network. The processing may comprise implementing a charging strategy for the message or implementing an intelligent routing strategy for the message, for example routing the message to the destination entity via a selected route based on network availability or forwarding the message to a destination other than that indicated in the message based on instructions received from the destination entity.

The method may include processing the message in accordance with a value added service.

Preferably, the method further comprises forwarding the message to the destination mobile entity in the foreign network. Hence the message may be forwarded to the destination as determined by the base network.

According to a further aspect, there is provided a method of providing routing information for routing a message to a destination mobile entity having an associated base network, the associated base network offering at least one value added service, the method comprising:
receiving a request for routing information at a component in the base network;
determining whether the destination mobile entity is subscribed to the at least one value added service;
if the destination mobile entity is subscribed to the at least one value added service, providing routing information in response to the request for routing the message to a message handling component which provides said at least one value added service.

This aspect may enable the system to apply value added services to messages directed to destinations when the destination entity is subscribed to those services. The system may selectively intercept messages for which value added services are required without disturbing the distribution of other messages.

In one embodiment, the method further comprises determining whether the destination mobile entity is roaming to a foreign network and, if the destination mobile entity is roaming to a foreign network, providing routing information in response to the request for routing the message to a component in the base network.

In either of the aspects above, receiving a request for routing information at a component in the base network may comprise intercepting the request for routing information before it reaches a home location register of the base network.

Advantageously, this may reduce the load on the network HLR by offloading some of the routing request messages from the HLR. Further, this may enable the method to be implemented without requiring modifications to the network HLR or the way in which it handles routing requests.

In one embodiment, the at least one value added service comprises at least one of:
selectively forwarding the message to a defined destination other than the destination message entity;
selectively copying the message to one or more defined destinations;
generating and sending an automated response message to the originator of the message;
preventing the delivery of a predetermined type of message, a message from a predetermined originator or a message sent during a predetermined time period;
retaining the message for delivery at a later time;
forwarding the message to each of a group of message recipients on a message distribution list;
parsing the message content;
applying a selected charging strategy for the message.

Further details of the value added services are set out below and it will be clear to one skilled in the art that the present methods may enable the implementation of a wide range of value added services, not limited to the list above.

Preferably, the message comprises a Short Message Service (SMS) message.

The method may further comprise terminating the message. For example, an acknowledgement of receipt of the mobile-originated message may be transmitted back to the originating mobile. The message may also be converted from a mobile-originated message to a mobile-terminated message.

The method may also further comprising forwarding the message to the destination mobile entity.

While the systems and methods described herein are particularly applicable to Short Message (SM) messages, it will be appreciated that the systems and methods may also be used in some embodiments for other message types. For example, the message may comprise an MMS, Instant Messenger, email, facsimile or voicemail message. In one embodiment, a plurality of different message types may be sent within the network.

In one embodiment, the network may comprise an SS7 network. However, in other embodiments, the network may comprise an MM7, GPRS, 3G network or an IP-based network or any other network type suitable for message transmission. Portions of the network may be implemented using different protocols.

According to a further aspect, there is provided a method of processing a message in a base network associated with a destination mobile entity, wherein the destination mobile entity is capable of roaming in a foreign network, the method comprising:
receiving a redirected message destined for the destination mobile entity;
performing at least one function for the message selected from a charging function and a value added service function;
forwarding the message to the destination mobile entity.

Hence redirected messages may be processed to perform charging or value added functions before the messages are forwarded to their destination, whether the destination is in the base network or roaming in a foreign network.

In one embodiment, the at least one value added service comprises at least one of:
selectively forwarding the message to a defined destination other than the destination message entity;
selectively copying the message to one or more defined destinations;
generating and sending an automated response message to the originator of the message;
preventing the delivery of a predetermined type of message, a message from a predetermined originator or a message sent during a predetermined time period;
retaining the message for delivery at a later time;
forwarding the message to each of a group of message recipients on a message distribution list;
parsing the message content;
applying a selected charging strategy for the message.

In one embodiment, the message comprises a Short Message Service (SMS) message. However, as set out above, the present method may be applicable to other message types.

In a preferred embodiment, the method further comprises terminating the message.

There is also described herein a method of processing a message in a base network associated with a destination mobile entity, wherein the destination mobile entity is capable of roaming in a foreign network, the method comprising:
receiving a redirected message destined for the destination mobile entity;
extracting an identifier for the destination mobile entity from the message;
determining whether to process the message in accordance with an optional service based on the identifier of the destination mobile entity;
based on the determination, processing the message in accordance with the optional service.

Hence redirected messages may be processed to perform optional services before the messages are forwarded to their destination, whether the destination is in the base network or roaming in a foreign network. This may allow optional services to be provided consistently for all messages sent to the destination entity regardless of the location of the destination entity.

Selectively applying optional services to the messages according to the destination identifier may enable intelligent processing of messages on a per destination basis.

Preferably, the method further comprises selecting an optional service from a plurality of optional services.

Hence, one component, or a cluster of components, in the home network may be used to provide many different optional services based on the destination identifiers so a network operator does not have to provide separate components in the network to provide separate optional services.

Preferably, determining whether to process the message in accordance with an optional service comprises comparing the identifier of the destination mobile entity with a database of identifiers associated with the optional service.

There is also described herein a method of processing a message in a base network associated with a destination mobile entity, the method comprising:
receiving the message at a message processing component in the base network;
analysing the message to determine an identifier of the destination mobile entity;
comparing the identifier of the destination mobile entity to a stored plurality of identifiers, each identifier being associated with at least one request for the provision of an optional service;
determining one or more optional services associated with the identifier;
processing the message in accordance with the at least one optional service determined.

The second aspect may therefore enable selected optional services to be provided to users in accordance with predefined user requests. A single processing component (which may be implemented as a plurality of interconnected but physically separate components) may be used to provide a plurality of services in one embodiment.

In either of the preceding aspects, the message is preferably redirected to a component in the base network when the destination mobile entity is roaming in a foreign network. Hence all messages addressed to the destination mobile entity may be directed through the message processing component so that the optional service can be provided even when the destination entity is roaming.

The optional service may include any of the services described herein and services may be provided singly or in combination. However, in one embodiment, the optional service comprises at least one of:
selectively forwarding the message to a defined destination other than the destination message entity;
selectively copying the message to one or more defined destinations;
forwarding the message to each of a group of message recipients on a message distribution list;
generating and sending an automated response message to the originator of the message.

Embodiments of the optional services that may be provided are described in more detail below. It is noted that the forwarding and copying services may enable messages to be forwarded or copied to other entities in the mobile network or to entities external to the network, for example to a user's email account or paging device.

In one embodiment, processing the message in accordance with the optional service comprises analyzing the message to determine an attribute of the message and processing the message based on the attribute determined.

The attribute may comprise an identifier of the message originating entity. Hence optional services may be provided based on the message originator. Alternatively or in addition, the attribute may be based on the size of the message or the originating or destination network for the message.

In such an embodiment, the optional service may comprise at least one of:
a blacklisting service for preventing delivery of messages from predefined message originating entities;
a whitelisting service for enabling delivery of messages only from predefined message originating entities.

Hence a user may block messages from certain originators, or may allow delivery of messages only from predefined originators. This may enable users to control where they receive messages from. Such a service may be used for example by parents to control messages that may be sent to their children. The whitelists and blacklists may be controlled and managed by using a web or telephone interface or by sending a text message from the destination mobile entity.

In one embodiment, the attribute comprises an attribute associated with the message content. For example, the attribute may be based on key words or pictures within the message or on the size of the message content.

In one embodiment, the optional service comprises preventing the delivery of a predetermined type of message. For example, messages that are determined to contain adult material or other undesirable content may be blocked from delivery to at least some users.

In one embodiment, processing the message in accordance with the optional service may comprise preventing delivery of a message sent during a predetermined time period. This may enable a user to define when they wish to receive messages. Outside this permitted time, messages may be returned as undeliverable or may be retained for later delivery during the permitted time.

In one embodiment, the at least one optional service comprises at least one of:
retaining the message for delivery at a later time;
applying a selected charging strategy for the message.

It will be clear to one skilled in the art that the present system may also be used to provide other optional services not specifically described herein. Further, optional services may be provided in combination. For example, a service that prevents delivery of messages during a predetermined period may also forward messages to an email account during this time.

In one embodiment, the method further comprises forwarding the message to the destination mobile entity.

In one embodiment, the message comprises a Short Message Service (SMS) or Multimedia Message Service (MMS) message. However, as set out above, the present method may be applicable to other message types.

In a preferred embodiment, the method further comprises terminating the message.

There is also described herein a method of managing a plurality of communication accounts for a user at a management component, wherein each account is associated with a communications network, wherein at least one account comprises an account associated with a mobile telecommunications network and wherein the management component is connected to the mobile telecommunications network, the method comprising:
registering an identifier for each communication account at the management component;
receiving at least one management rule for a communication event directed to at least one communication account;
storing the management rule at the management component;
receiving a communication event;
determining whether the communication event has an associated management rule;
if the event has an associated management rule, processing the communication event in accordance with the management rule.

Preferably, the method further comprises providing a graphical user interface for enabling the user to input and amend management rules. The GUI may be a web-based interface. The method may further include providing a text or voice based interface for user input of rules.

In one embodiment, at least one communication account comprises an internet based account, for example an email account, an instant messaging account or a voice over IP telephony account.

Preferably, at least one communication account comprises an email account.

In one embodiment, the plurality of communication accounts comprise a plurality of accounts associated with one or more telecommunications networks. For example, the user may have one personal mobile account and one work mobile account, each having associated Subscriber Identity Module (SIM) numbers.

In a preferred embodiment, the management rule comprises a rule associated with at least one of:
forwarding a communication event to one or more predefined destinations;
copying a communication event to one or more predefined destinations;
analysing the communication event and blocking or permitting transmission of the communication event based on the analysis;
blocking or permitting transmission of the communication event based on predefined time-based rules.

Any of the rules set out above in relation to the other aspects may be implemented singly or in combination in conjunction with the present aspect. For example, the present aspect may implement time-based or content-based blocking as described above.

Preferably, the communication event comprises at least one of: a Short Message Service message, a Multimedia Service message, an email message, an Instant Messenger or web-based chat message, a voice message, a voice call.

There is also described herein a method of providing routing information for routing a message to a destination mobile entity having an associated base network, the associated base network offering at least one optional service, the method comprising:
receiving a request for routing information at a component in the base network;
determining whether the destination mobile entity is subscribed to the at least one optional service;
if the destination mobile entity is subscribed to the at least one optional service, providing routing information in response to the request for routing the message to a message handling component which provides said at least one optional service.

This method may enable the system to apply optional services to messages directed to destinations when the destination entity is subscribed to those services. The system may selectively intercept messages for which optional services are required without disturbing the distribution of other messages.

In one embodiment, the method further comprises determining whether the destination mobile entity is roaming to a foreign network and, if the destination mobile entity is roaming to a foreign network, providing routing information in response to the request for routing the message to a component in the base network.

Receiving a request for routing information at a component in the base network may comprise intercepting the request for routing information before it reaches a home location register of the base network.

Advantageously, this may reduce the load on the network HLR by offloading some of the routing request messages from the HLR. Further, this may enable the method to be implemented without requiring modifications to the network HLR or the way in which it handles routing requests.

In one embodiment, the at least one optional service comprises at least one of:
selectively forwarding the message to a defined destination other than the destination message entity;
selectively copying the message to one or more defined destinations;
generating and sending an automated response message to the originator of the message;
preventing the delivery of a predetermined type of message, a message from a predetermined originator or a message sent during a predetermined time period;
retaining the message for delivery at a later time;
forwarding the message to each of a group of message recipients on a message distribution list;
parsing the message content;
applying a selected charging strategy for the message.

The optional service may include any of the services described herein and services may be provided singly or in combination.

Further details of the optional services are set out below and it will be clear to one skilled in the art that the present methods may enable the implementation of a wide range of optional services, not limited to the list above.

Preferably, the message comprises a Short Message Service (SMS) message.

The method may further comprise terminating the message. For example, an acknowledgement of receipt of the mobile-originated message may be transmitted back to the originating mobile. The message may also be converted from a mobile-originated message to a mobile-terminated message.

The method may also further comprising forwarding the message to the destination mobile entity.

While the systems and methods described herein are particularly applicable to Short Message (SM) messages, it will be appreciated that the systems and methods may also be used in some embodiments for other message types. For example, the message may comprise an MMS, Instant Messenger, email, facsimile or voicemail message. In one embodiment, a plurality of different message types may be sent within the network.

In one embodiment, the network may comprise an SS7 network. However, in other embodiments, the network may comprise an MM7, GPRS, 3G network or an IP-based network or any other network type suitable for message transmission. Portions of the network may be implemented using different protocols.

Apparatus aspects corresponding to the method aspects set out above may also be provided and the apparatus may further incorporate one or more of the preferred features described above. Computer program, computer program product or computer readable medium aspects may further be provided corresponding to the method aspects set out above. Further a network may be configured and provided to implement the method aspects set out above.

Embodiments of the methods and apparatus described here will now be set out in more detail with reference to the figures in which:
Fig. 1 illustrates a prior art message submission process;
Fig. 2 illustrates a prior art message delivery process;
Fig. 3 illustrates a prior art message delivery process when the destination entity is roaming;
Fig. 4 illustrates a message delivery process according to one embodiment when the destination entity is roaming;
Fig. 5 illustrates an architectural framework for SVAS provisioning according to one embodiment;
Fig. 6 is a schematic diagram of a further architectural framework according to one embodiment;
Fig. 7 illustrates a further embodiment of the intercept system;
Fig. 8 is a schematic diagram of a further system according to one embodiment;
Fig. 9 illustrates a system according to one embodiment;
Fig. 10 illustrates an autorespond system according to one embodiment;
Fig. 11 illustrates a message sending process in a prior art system;
Fig. 12 illustrates a message sending process in one embodiment of the present system.

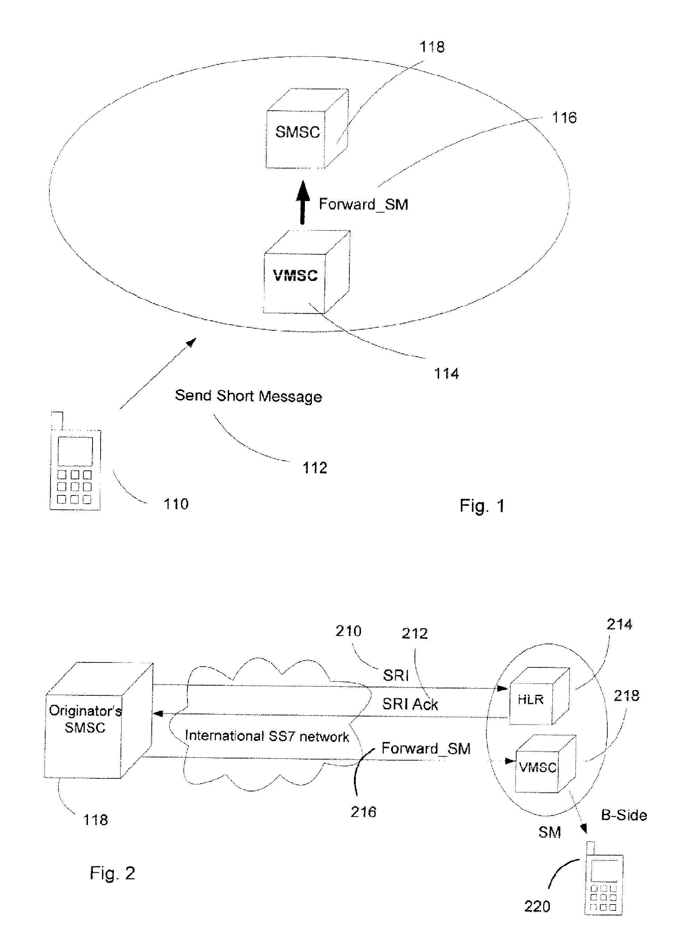

The process of delivering an SMS message from one subscriber to another according to a prior art system will now be described with reference to Figs. 1 and 2.

The process of getting an SM from the originating subscriber A to the destination subscriber B is carried out through two procedures: the MO-SM (Mobile Originated Short Message) transmission procedure, and the MT-SM (Mobile Terminated Short Message) transmission procedure.

Fig. 1 illustrates the MO-SM process. The SM 112 sent by subscriber A 110 is received by the Mobile Switching Centre (MSC) 114 to which A is attached. The MSC then forwards the SM to the Short Message Service Centre (SMSC) 118 A is assigned to. A MAP (Mobile Application Part) protocol Forward_SM message 116 is used to forward the message from the MSC 114 to the SMSC 118.

The MT-SM transmission procedure now follows (see Fig. 2), as the SMSC 118 tries to deliver the SM directly to the receiving subscriber 220. To that effect, the SMSC starts by interrogating B's HLR 214 in order to obtain B's International Mobile Subscriber Identity (IMSI) and present location information (global title of the foreign MSC). The MAP SRI (Send_Routing_Info) message 210 is sent, the reply 212 to which contains the requested location info. The SMSC 118 then forwards the SM 216 to the MSC 218 B is attached to (MAP Forward_SM message 216). The SM is finally pushed to the B subscriber 220.

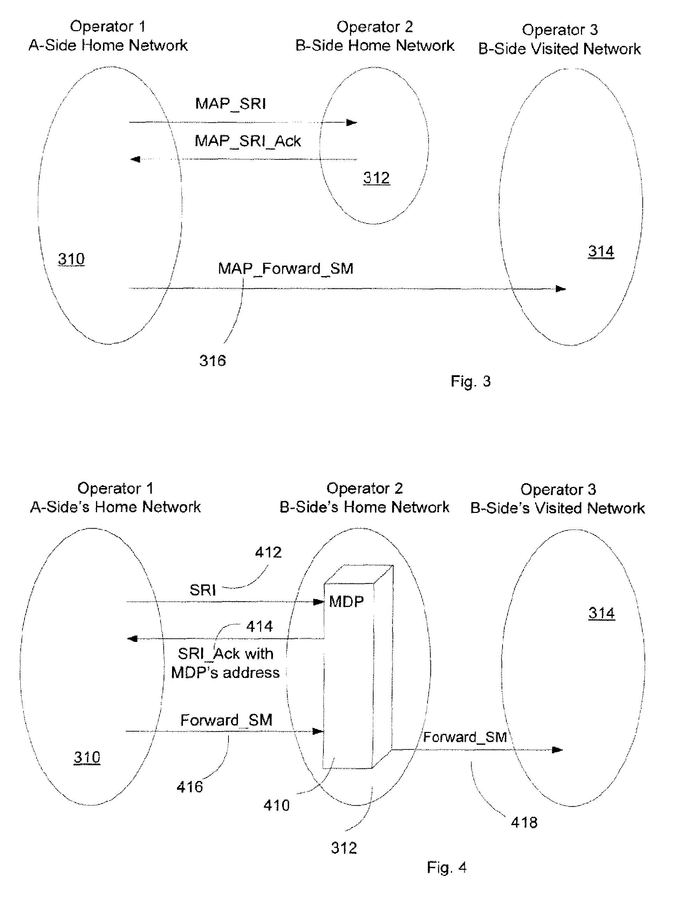

Fig. 3 shows a normal MT-SM delivery procedure when the B-side subscriber is roaming in a separate network 314.

The message is sent by A from his home network 310. However, it is noted that the B-Side home network 312 provides the current location information for its subscriber, and then the actual Forward_SM message 316, carrying the user information, bypasses it completely. In other words, service providers have little or no control over how Short Messages are delivered to their subscribers when they roam.

One embodiment of the present system will now be described in more detail with reference to Fig. 4.

As illustrated in Fig. 4, the B-Side Home Network 312 (the home network of the message destination entity) has an Mobile Delivery Platform (MDP) 410 installed, and the network has been configured to send all SRI requests 412 to the MDP 410.

When an SRI 412 reaches the MDP 410, the MDP 410 obtains the B-Side location information from the HLR, but then replies 414 to the original enquiry by providing its own address as B-Side's foreign MSC. The Forward_SM 416 will therefore be sent to the MDP 410.

The MDP 410 can now apply intelligent processing and routing rules to the message received before forwarding it 418 to its final destination. In other words, B-Side's service provider can now control the delivery of short messages to the subscriber even as he roams.

Examples of intelligent routing scenarios and services that may be offered to the destination entity using the system described above will now be set out in more detail. It will be clear to the skilled person that the examples set out below represent only a small number of possible embodiments of services that may be offered and are not intended to be limiting in any way.

Possible Special Value Added Services (henceforth referred to as SVAS) that may be offered to a user using a system such as that described above may include SMS Copy, "Out of the office" auto-reply messages, and SMS Forwarding to multiple MSISDNs and/or e-mail. These services are described in more detail below.

### SMS Copy

In an SMS copy service, SMS can be copied to email in order to provide an archive, or to provide access on demand while the subscriber is travelling abroad. SMS can be copied to other devices (for example the 'twin SIM' in a carphone, or to the data card of a computer.

The Rules Engine of the Mobile Service Plaform (MSP) may be implemented to ensure, for example that SMS are only copied to the carphone if the device is active, thus reducing traffic and enhancing customer service perception.

In a further implementation, the operator can provide an intermediarisation service for business, by archiving SMS sent to a SMS recipient in order to provide non-repudiation services where financial transactions are triggered by SMS with offline payment (for example placing an order for a part against an existing account).

An SMS Copy service may also be used to distribute SMS to a group acting co-operative - for example a support team, or a group of taxi drivers - the first to respond to the SMS could be assigned the work.

### SMS Forward

While implementations of the Forward process may be similar to the SMS Copy service, different applications may become available. For example, forwarding SMS may enable applications like the following:
- Sending SMS from certain recipients to a colleague and other SMS to email for later review.
- Providing a termination of service forwarding service - should a subscriber move to another network, the subscriber's SMS could be diverted to another address for a period.

### Auto-Answer (Out of Office Reply)

An Auto-Answer capability can be used in conjunction with either Forward or Copy to provide additional subscriber services, or received messages can simply be rejected. For example, subscribers may wish to enable an auto-answer for periods when they are in meetings, travelling or simply don't wish to be disturbed.

The auto-reply message can be composed by the subscriber, or a default can be set up by the operator. In one implementation, the auto-answer facility may be integrated with Personal Information Manager (PIM) services so that during busy or out-of-office periods responses will automatically be generated.

Since subscribers may activate the Auto-Answer service when they are roaming, in preferred implementations, it may be possible to allow, for example, SMS from the country in which the subscriber is roaming to be delivered to the handset, thus providing the capability to communicate.

### Barring

In a barring service, subscribers can set-up times when they do not wish to receive SMS, with optional forwarding to a colleague, or to email.

In addition, in some embodiments, powerful barring can be operated by using White Lists or Black Lists to bar MSISDNs, applications, specific content types (for example Adult or Premium Rate content), content providers or phrases within content from being delivered.

Barring can be set by the user sending an SMS request message or by customer care operators through a web or provisioning interface.

### Distribution Lists

The system described herein can also operate on MO SMS. Thus services that are triggered by MO SMS can easily be provided.

Distribution lists may be implemented to enable subscribers to create numbered lists containing MSISDNs of friends or colleagues to which the message will automatically be delivered if an SMS is sent to that subscribers list number.

### Legal Intercept

Because the system described herein operates on both MO and MT messages related to a MSISDN it is may also be used for legal intercept in some embodiments. SMS can be non-intrusively copied to different agencies by email, and can be blocked and forwarded for review.

### Virtual Private Network

VPN short number dialling is often available. Offering short number SMS is a logical extension, and can be provided using the SVAS architecture. Call Data Records (CDRs) can be managed to vary the charge rate for SMS sent within the VPN, and for example, to apply VPN SMS to a special account.

In some embodiments, the VPN service can be configured to prevent SMS being sent outside the VPN, can apply different rates, or could effect a different billing mechanism - for example SMS sent within the VPN would be billed to the corporate account, while SMS sent externally would be billed to the owner of the handset.

Further details of implementations of the system described herein will now be set out in more detail by way of example.

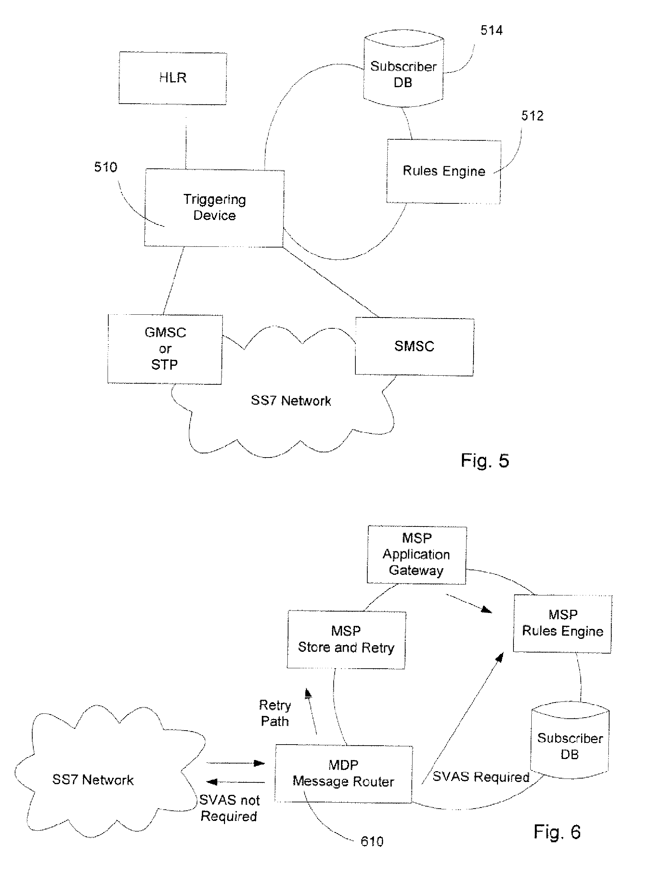

Fig. 5 illustrates an architectural framework for SVAS provisioning according to one embodiment. This architecture may enable a simple, fast triggering device 510 to manage SMS routing with minimal latency, while a sophisticated processing engine 512 (Rules Engine) may be used to manage and execute potentially complex business rules.

Both nodes may be connected to a subscriber database 514, where the SVAS status for each subscriber may be updated in real time.

Separating trigger evaluation from SVAS implementation may be provide one or more of the following advantages:
- Reducing the workload on the SVAS implementation node: the SVAS triggering device acts as a filter, forwarding only relevant traffic to the SVAS implementation device, thus reducing its workload.
- Improved performance: the simple decision rule implemented at the triggering device (SVAS: Yes or No?) may allow for lower latency added onto messages for which no SVAS is provisioned.
- Independent scalability: this framework may allow a service provider to add capacity only if and where it is needed; for example: if the SMS traffic increases, but not the SVAS traffic, an upgrade to the triggering device will suffice; likewise, an increase in the subscriber base that has no corresponding increase in traffic means an upgrade to the database will be enough.
- Inherent Flexibility: can design complex rules without regard to the latency of 'normal' messaging.

These requirements clearly apply to P2P SMS traffic. However these are not the only requirements. Advantageously, the present system may also deal with some or all of the following situations:
- Out-Roamers should be catered for, particularly since one of the major anticipated reasons for service activation is holidays. This may be implemented using the system described herein that forces SMS messages from foreign networks to be handled by the home network. This ensures that rules can be applied to all SMS.
- Application Originated Messages - in preferred embodiments, it is not assumed that Application Originated (AO) messages are exempt from treatment (a user may want subscribed alerts forwarded to email, or not). Hence, the solution described is preferably also capable of treating AO messages. Furthermore, in further embodiments of the system, it may be possible to perform similar operations on MMS traffic.

Using the system described herein, each or some of the situations described above may be addressed. For example, one embodiment of the system may manage MT Traffic from other networks (even to out-roamers), MO & MT traffic from the home network, and AO traffic from own network using the same rules.

A further example architecture for the system described herein is illustrated in Fig. 6. Such an architecture may enable the separation of different functions within the system.

The Mobile Delivery Platform (MDP) may be implemented to perform some or all of the following functions:
- SMS Routing and First Delivery Attempt, with Retry through existing SMSCs or a proprietary Retry Component
- AO-MT and MO-AT application by-pass, to protect the existing SMSCs from overload
- SMS "Home Routing" as described herein to ensure SMS for out-roamers are treatable for SVAS
- SMS Firewall to protect the home network against fraud and control Spam in addition to acting as the triggering node for SVAS.

The Mobile Service Platform (MSP) may be implemented to provide, across a number of modules, the flexible logic engine for the SVAS. The MSP may further act as an application gateway for AO SMS (as explained above). In addition the MSP may provide one or more of the following functions:
- Load Sharing for AO SMS (and MMS) delivery across the SMSC and Router infrastructure, protecting SMSCs and P2P traffic from being overloaded.
- Extensive set of API's and protocols to simplify external application integration and reduce time to market
- Comprehensive filter engine for customisation of services (blocking, throttling, routing, validating, etc)
- Provide subscriber protection against receipt of defined content types (such as Premium Rate or Adult) or specific application providers or services
- Implement Aliasing to protect customer identity
- Enhances reconciliation effectiveness by managing permanent records of all transactions
- Single point for managing both SMS and MMS services, with a Role Based Web UI for simple provisioning and administration
In one implementation of the system, the HLR may be implemented to act as a SVAS triggering node and point directly to the Rules Engine whenever a subscriber requests SVAS activation.

In other words, upon reception of an SRI message, the HLR will check whether the subscriber concerned has an SVAS activated. If not, the HLR replies with the subscriber's current location. Otherwise, the SVAS replies with the address of the SVAS Rules Engine (i.e. the MSP).

This solution may be implemented by re-using a network element already owned by service providers, while permitting existing SMS routing components to continue in use without change.

However, this solution may require the HLR to be connected to a provisioning tool that updates the database whenever a subscriber activates or deactivates an SVAS.

Whilst it may be an appropriate implementation in some embodiments, this approach may provide an incomplete and perhaps unusable solution in other situations. In particular:
- This architecture only works for MT procedures, meaning it provides a service provider with the ability to provide SVAS capabilities that are triggered on the basis of the destination (like "out of the office" auto-replies). For any SVAS capabilities triggered on the basis of the origin (like distribution lists), this approach would have to be complemented by a similar subscriber status query dependent routing function at the SMSC.
- Routing loops may also cause a further problem with this solution: in the SMS copy service scenario, the SVAS implementer copies the original message to a group of MSISDN's, and optionally forwards the message to the original recipient - thus a new SRI for this recipient will be sent to the HLR, which will reply with the SVAS implementer's address again.

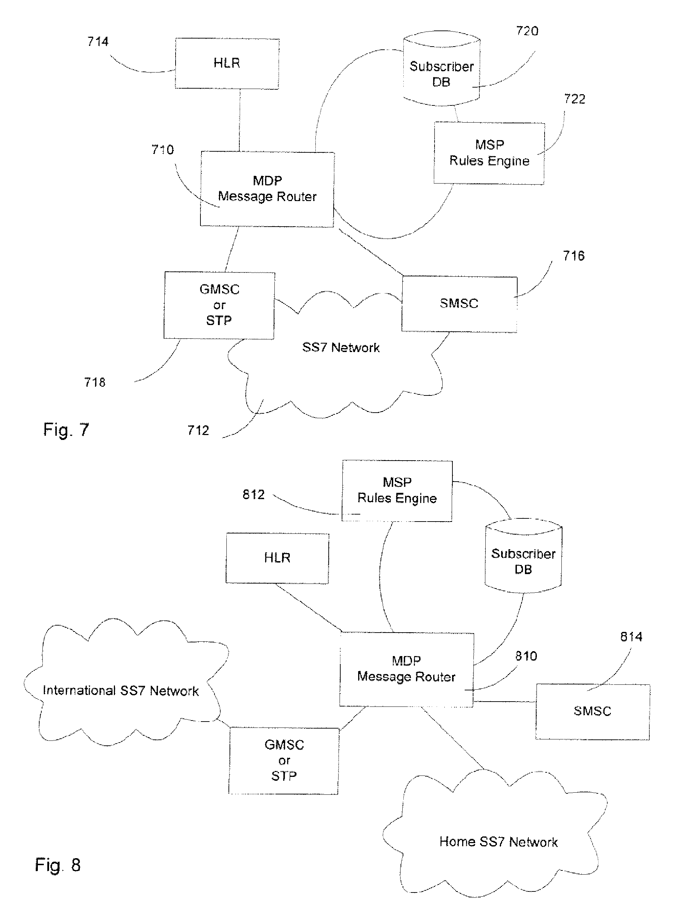

An alternative approach or solution may be termed the "SRI Intercept" approach. This approach is illustrated schematically in Fig. 7.

In this solution, access from the SS7 network 712 to the HLR 714 passes through an SVAS triggering device, which may comprise an MDP message router 710.

In the embodiment illustrated, the SVAS MDP 710 will intercept all SRI requests sent to the HLR 714. These requests can be coming from the service provider's SMSCs 716, or from other networks 718 (through the service provider's GMSC or Gateway STP).

The MDP 710 preferably uses the data available in the SRI to query the subscriber database 720 to find out whether an SVAS is applicable:
- If it is, the MDP 710 may reply to the SRI with the SVAS Rules Engine's (MSP) address 722; alternatively, the MDP 710 can reply with its own address - forwarding the SMS to the Rules Engine upon reception of the ForwardSM.
- If SVAS are not required, the MDP triggering node 710 forwards the SRI to the HLR 714, and then forwards the HLR's reply to the querying node.

Embodiments of this solution may provide the advantage that it is not complicated, given that it is very close to the earlier from the network's point of view, and it does not interfere with the actual operation of the HLR (indeed, it reduces the load on the HLR). Furthermore, the triggering node could also provide a protection layer against Denial of Service attacks launched against the HLR - a throttling mechanism can be implemented for that.

The embodiment of the system described works on the basis of MT messages, and is applicable to destination-triggered SVAS (like auto-replies). Similar, complementary systems may also be implemented (at the SMSC, for instance) for services that are triggered on the basis of the origin (for example distribution lists, or archive).

The system disclosed in Fig. 7 may provide a solution the routing loop issue described above for the service scenario where an SVAS is enacted, but the SMS should nevertheless be forwarded to the original recipient:
- The Rules Engine in the MSP can be programmed to loop back the message to the triggering node; this may be done in a specific message channel for which normal forwarding always applies
- The database query at the triggering node level can yield 3 possible answers, instead of two: "NO SVAS APPLICABLE", "SVAS APPLICABLE", and "SVAS APPLICABLE + NORMAL FORWARD".

An architectural point relating to embodiments of the system is the handling of voice-MAP traffic, such as Mobile Terminated Calls. Assuming the SVAS node only gets SMS-MAP traffic, then the GMSC, and other MSCs, would still access the HLR directly for voice traffic. This means some STP in the service provider's network would be required to split voice- and SMS-MAP traffic. The corollary here is that the STP can theoretically be the HLR proxy itself, provided it has the capability to make routing decisions on the basis of a subscriber status database query.

A variation of the architecture described above, which may be termed the ForwardSM Sink Variant, is one where the MDP always replies with its own address to the SRI requests, and only does SVAS queries when the ForwardSM is received. Note that in this case, the MDP will get all SMS messages transiting through the network. The component may then attempt to directly deliver them without transmitting them through the network SMSC. This may free SMSC capacity to provide other services or enable the processing of a higher throughput of messages.

One advantage of this embodiment may lie in the fact that the SVAS query can then be done on the basis of the information available in the ForwardSM message. This may allow the implementation of origin-triggered SVAS as well, given that the originator of the SM is included in the ForwardSM request.

A further example embodiment of the system is illustrated schematically in Fig. 8. Such an embodiment may enable the intercept of both SRI and mobile originated messages.

In the embodiment illustrated in Fig. 8, the MSP 812 is the SVAS implementation node, and the MDP 810 is the SVAS triggering node.

In this case, the SVAS MDP 810 will intercept the SRI requests for all messages coming in from other networks, and all the MO-SM messages generated within the Home network, which will be sent via the network SMSC 814.

For the SRI intercept, the triggering node 810 can make triggering decisions on the basis of the SRI itself, or always reply systematically with its own address and apply triggering rules upon reception of the ForwardSM. The latter may be preferable in some embodiments, as it will allow both origin- and destination-based triggering. Again, an STP splitting voice- and SMS-MAP traffic may be used. For messages coming from foreign networks, there is no real difference between the present solution and the earlier system described above.

For the MO-SM intercept, the triggering rules may be applied upon reception of the MOForwardSM. Both origin- and destination-based rules can be implemented. The SMSC 814 may only receive SMS traffic for which no SVAS applies. This has the advantage of reducing traffic on the SMSC 814. Additionally, the SVAS triggering node can also implement first delivery attempt (FDA) routing, but that is optional.

A feature of implementations of the present system may be that MDP can process MO and MT messages and apply rules based on any field of a message. In other words: the solution may provide for both origin and destination based SVAS triggering with minimal latency while avoiding the routing loop problem mentioned above.

A further benefit of the system described may be the use of the flexible MSP Rules Engine to manage external interfaces, sophisticated logic and charging for the SVAS. The capability to manage A2P traffic, including MMS, together with direct P2P MMS delivery may enable an operator to deliver the same service levels for a number of different messaging modes in the future.

As set out above, in one embodiment, the system may be used to provide value-added services (VAS) to users, who may be either the originator or the destination for the message. VAS may be provided at proprietary components or at existing standard components in the network, such as at an MDP or SMSC. In one embodiment, however, a separate component may be provided to enable one or more VAS in the network. This component may be termed the Profile Server and may be implemented as a subscriber management application in the network, either in one or more standalone components or as part of other hardware components. Embodiments of the Profile Server may facilitate service authorisation and the personalisation of valued added messaging services as described in more detail below.

The Profile Server may be implemented as a central database for subscriber profile information, particularly that associated with innovative messaging services. This may allow operators to provide SMS and MMS Optional Services to users such as SMS/MMS Copy/Forwarding, SMS/MMS Archiving and SMS/MMS Auto-Reply (Out of the Office).

In addition, the Profile Server may be used to assist Mobile Operators in complying with regulatory enforcement of Premium and Adult related messaging content by enabling a mobile "Nanny" service that restricts access to these services by minors.

The Profile Server may also be implemented to complement the operators' existing subscriber profile management solutions by providing fine-tuned profile information to manage the increasingly numerous messaging services deployed across the operators' network.

One embodiment of the Profile Server may be implemented to provide:
- Central point of consolidation and execution of SMS and MMS optional service profile information
- Highly scalable and flexible data model to facilitate simple and custom extensions
- Standard interfaces for integration with existing messaging products
- A central blacklist/whitelist (Opt-In/Opt-Out) function to prevent the delivery of unsolicited SPAM messages to subscribers
- Comprehensive tracking and recording of all messaging behaviours to enable targeted mobile marketing and advertisement campaigns via a Mobile Campaigner system

Further examples of uses of the Profile Server, one or more of which may be implemented in an embodiment of the system, are set out below in more detail.

### Post-pay/pre-pay indicator

One of the services that the system described herein may provide is segregation of post-paid from pre-paid traffic. Operators may choose to separate the traffic for these two types of subscribers in order to provision SMSCs with different charging capabilities, which may streamline processing and optimise feature license expenditure. In this scenario, the network operator may provision one SMSC for pre-paid charging, and another for post-paid charging.

An MSP can provide the required traffic separation. A subscriber database may then be connected to the MSP. Upon reception of an application originated (AO) message, the MSP may be configured to consult the Profile Database in order to determine whether the recipient of the message is pre or post paid. The message is then routed accordingly.

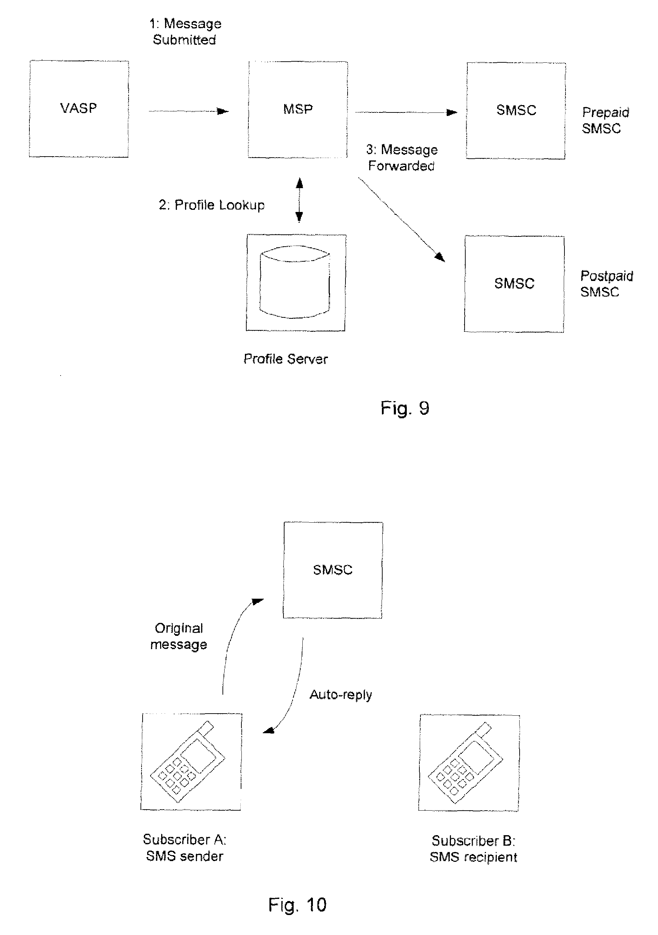

Fig. 9 illustrates one embodiment of an MSP acting as a pre-paid / post-paid traffic separation point.

### Account status indicator

An account status indicator may be used by the messaging system to decide whether to forward or block an AO message destined to a certain subscriber. In one embodiment, this indicator may be a simple flag, indicating whether the subscriber account is blocked or not. If the account is blocked, messages to the subscriber will not be forwarded.

### Flag for legal intercept

Whenever this flag is activated for a subscriber, the messaging system may be configured take a configurable action on all messages destined to that subscriber. That action may be one or more of the following:
- Log the message
- Block the message
- Route the message to a specific destination
- Generate an SNMP trap and/or an email directed to a specific recipient

### Blacklist for MSISDNs

With this feature, a blacklist of MSISDNs can be created for a specific subscriber. This may be used in case the subscriber does not want to receive messages from certain subscribers.

Upon receipt of a message, the system checks the existence of a blacklist for the recipient of the message. If one does exist, the system will check the list to see if the message originator's address is in the list. If it is, the message is blocked. Otherwise, the message is forwarded.

### Whitelists for MSISDNs

With this feature, a subscriber may opt to receive messages from subscribers in the white list only.

Upon receipt of a message, the system checks the existence of a whitelist for the recipient of the message. If one does exist, the system will check the list to see if the message originator's address is in the list. If it is, the message is forwarded. Otherwise, the message is blocked.

### Blacklist for VAS

With this feature, a blacklist of VAS accounts can be created for a specific subscriber. This may be used in case the subscriber does not want to receive specific content (e.g. adult content).

Upon receipt of a message, the system will check the existence of a VAS blacklist for the recipient of the message. If one does exist, the system will check the list to see if the originating VAS is in the list. If it is, the message is blocked. Otherwise, the message is forwarded.

### Whitelist for VAS

With this feature, a subscriber may opt to receive messages from VAS accounts in the white list only.

Upon receipt of a message, the system checks for the existence of a VAS whitelist for the recipient of the message. If one does exist, the system will check the list to see if the originating VAS is in the list. If it is, the message is forwarded. Otherwise, the message is blocked.

### Auto-reply indicator

The Auto-reply indicator may be implemented as a flag. Whenever a message is sent to a subscriber for which this flag is activated, the system may send the originator of the message an automatic auto-reply (e.g. "out of the office"). This service may be implemented for peer to peer traffic only.

### Auto-reply message

Optionally, the auto-reply indicator can be associated with an auto-reply message. This message may be a standard or a subscriber-configurable text string which may have a maximum size of 160 characters.

### Forward Destination Indicator

When the Forward Destination Indicator is set for a subscriber, then any message sent to that subscriber may be forwarded to a series of other destinations. These may include any combination of:
- MSISDNs (a maximum size for the distribution list, for example 10, may be defined)
- Email (a maximum size for the distribution list, for example 10, may be defined)
- Log file

In this case, the message is not sent to the original recipient. The case where a message is forwarded to a log file can be used for legal intercept purposes.

### Copy Destination Indicator - Destination triggered

This feature is almost the same as the previous one, except that in this case the message is still sent to the original recipient.

### Copy Destination Indicator - Origin triggered (distr. lists)

A subscriber with this feature will have any messages that he sends automatically copied to series of destinations that may include any combination of the following:
- MSISDNs (a maximum size for the distribution list, for example 10, may be defined)
- Email (a maximum size for the distribution list, for example 10, may be defined)
- Log file
The case where a message is forwarded to a log file can be used for legal intercept purposes.

### Content Category Blacklist

In this feature, a subscriber may opt not to receive certain types of content (e.g. adult content). Whenever a message is sent to this subscriber, the system determines whether the subscriber has such a list. If that is the case, the system compares the type of content being delivered to the subscriber to this blacklist. If there is a match, the message is blocked. This functionality requires the messaging system to be able to classify the VAS accounts according to type of content delivered.

### Blackout time window

When a subscriber has this feature activated, any messages sent to him are blocked at a certain time of the day (e.g. between 10am and 5pm). This option can be combined with the "auto-reply" feature. Messages may be discarded by default or, at the subscriber's request, messages may be buffered for later delivery. A buffer limit, for example up to 10 messages, may be implemented. In one embodiment, message buffering may not take place in the Profile Server but rather in a separate MSR (Message Store and Retry) module or an SMSC.

### Publicity insertion flag

Network operators may want to exploit any unused capacity in a message to insert publicity messages. Thus, whenever a message has fewer than 141 characters, for instance, a small publicity message of up to 20 characters may be included. Subscribers may be given the ability to opt in and out of such an arrangement. The publicity insertion may be done before the MT leg of a message delivery, as the originator may not want publicity inserted, although agreement would be needed to respect such a wish if the message were to cross different network operators. Additionally, if publicity has already been inserted in a message, it may still reach a subscriber who may have opted out of it.
Therefore this check may be done on the basis of the message originator only.

### Reverse charging white list

In this case, a subscriber may opt to pay in order to receive messages from certain other subscribers. Note that this will only work when all the subscribers in the white list are in the same network as the subscriber who has this feature. Messages coming from other networks will have been charged already by the time they are evaluated. Network operator marketing departments do not consider this to be a problem, as this creates an incentive for groups of people (e.g. families) to subscribe to the same network.

Embodiments of the system described herein are preferably implemented to provide a seamless user experience. Legacy SMS infrastructure is unable to provide that since legacy infrastructure can only guarantee SMS VAS functionality whenever the sender of an SMS is on-net. If the sender is off-net (i.e. the sender is another operator's subscriber), the service will not be implemented. Hence, to a consumer, it will appear that the service only works every once in a while. Indeed, customer confusion and the added cost of complaint processing may make this a very unattractive proposition.

The system described herein may be implemented to remove this constraint and allows the implementation of fully functional and unrestricted SMS VAS. The example below uses the "out of the office" auto-reply service to illustrate an advantage of the present messaging architecture over legacy infrastructure.

An "out of the office" auto-reply service may be triggered on the basis of the message destination, i.e., the service is carried out because the message recipient has requested its activation. One embodiment of an auto-reply service according to one embodiment is illustrated in Fig. 10.

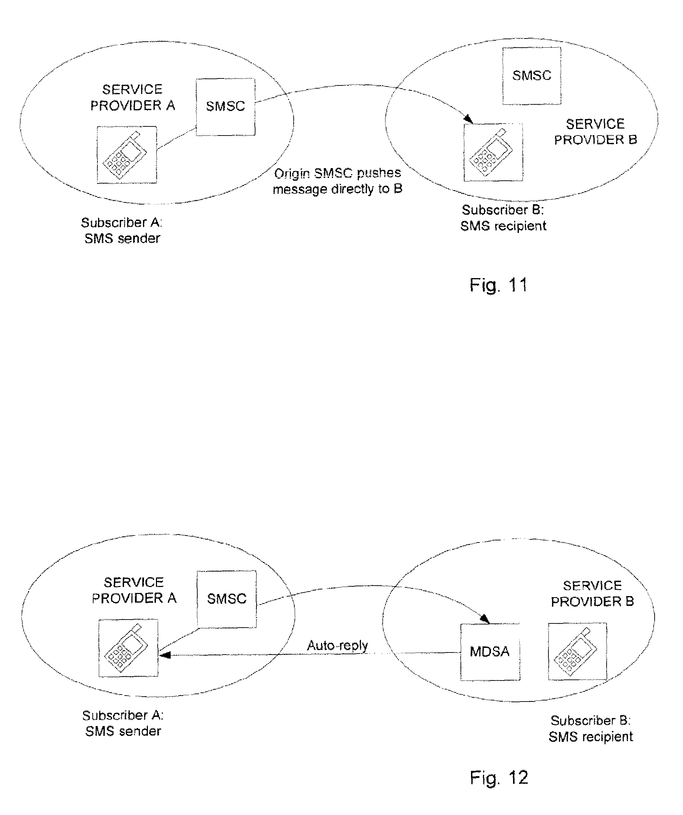

In prior art systems, in the case where the sender of the original message is a customer of another service provider, the auto-reply service will not be enacted, as the sender's SMSC will push the message directly to the recipient, bypassing his assigned SMSC. That is, the service fails when the sender and the receiver are customers of different service providers. This prior art system is illustrated schematically in Fig. 11.

The VAS system described herein is based on a network solution that can intercept both Mobile Originated and Mobile Terminated messages. This allows the required flexibility to provide a full, unrestricted VAS solution. In the present system, a Message Delivery Platform (MDP) intercepts the Mobile Terminated message arriving from the foreign network, and allows the implementation of the auto-reply feature. This is true even if the message recipient is roaming. This removes any caveats on the functionality of VAS services: auto-reply is returned even when the sender and receiver are customers of different service providers. One embodiment of such a service is illustrated schematically in Fig. 12.

In this way, embodiments of the system may be capable of intercepting both Mobile Originated and Mobile Terminated messages (and associated routing information requests). This may allow the provision of fully featured services that can be triggered on the basis of either the origin or the destination of the original message, both on-net and off-net.

In a further embodiment, which may be implemented independently or in conjunction with the system described above, a user may have a plurality of identifiers in one or more mobile networks or in other types of network. For example a user may have one subscriber identity module (SIM) for personal use and a second SIM for work purposes. The user may further have one or more email accounts on the internet, which may be accessible via a PDA device.

Aspects of the present system may enable a user to manage communication based on a combination of these devices. In such a system, the user may create a Personal Mobile Network, or a user-defined account via which they can manage all of their accounts. For example, on accessing the Personal Mobile Network, for example via a web interface, a user may define communication rules for each of his accounts. For example, a user may block calls and messages from being received at his work SIM (or mobile telephone) outside working hours. Further, if a user is on vacation, he may set up each of his accounts to generate an autorespond message in his absence. Messages received at each of the SIMs may be forwarded to the user's email account for later reading.

In one embodiment, a Personal Mobile Network may be implemented using components in one of the networks, for example the telecommunications or an IP network. A setup engine may be provided in the network to enable the user to manage the necessary communication rules and preferences. This setup engine may operate primarily via a web interface, where the user may add further accounts to the Personal Mobile Network and set up rules for forwarding and copying messages. However, the engine preferably also includes an interface to other networks used by the user's devices. This may enable flexible management of the rules associated with the user's network. For example, the user may cancel an autorespond message on his return from vacation by sending an SMS message to the setup engine or by making a telephone call, preferably via an automated telephone system.

It will be clear to one skilled in the art that variations and modifications may be provided to the systems and methods described above and that features of one aspect may be applied to other aspects.

## Claims

1. A method of providing routing information for routing a message to a destination mobile entity having an associated base network, wherein the destination mobile entity may roam to a foreign network, the method comprising:
receiving a request for routing information at a component in the base network;
determining whether the destination mobile entity is roaming to a foreign network;
if the destination mobile entity is roaming to a foreign network, providing routing information in response to the request for routing the message to a component in the base network.

2. A method according to Claim 1 further comprising processing the message at the component in the base network, preferably further comprising determining whether the destination mobile entity is subscribed to the at least one value added service; if the destination mobile entity is subscribed to the at least one value added service, providing routing information in response to the request for routing the message to a message handling component which provides said at least one value added service.

3. A method of providing routing information for routing a message to a destination mobile entity having an associated base network, the associated base network offering at least one value added service, the method comprising:
receiving a request for routing information at a component in the base network;
determining whether the destination mobile entity is subscribed to the at least one value added service;
if the destination mobile entity is subscribed to the at least one value added service, providing routing information in response to the request for routing the message to a message handling component which provides said at least one value added service;
the method preferably further comprising determining whether the destination mobile entity is roaming to a foreign network and, if the destination mobile entity is roaming to a foreign network, providing routing information in response to the request for routing the message to a component in the base network.

4. A method according to any preceding claim wherein receiving a request for routing information at a component in the base network comprises intercepting the request for routing information before the request reaches a home location register of the base network.

5. Apparatus for providing routing information for routing a message to a destination mobile entity having an associated base network, wherein the destination mobile entity may roam to a foreign network, the apparatus comprising:
means for receiving a request for routing information at a component in the base network;
means for determining whether the destination mobile entity is roaming to a foreign network;
means for providing routing information in response to the request for routing the message to a component in the base network, if the destination mobile entity is roaming to a foreign network.

6. Apparatus for providing routing information for routing a message to a destination mobile entity having an associated base network, the associated base network offering at least one value added service, the apparatus comprising:
means for receiving a request for routing information at a component in the base network;
means for determining whether the destination mobile entity is subscribed to the at least one value added service;
means for providing routing information in response to the request for routing the message to a component in the base network, if the destination mobile entity is subscribed to the at least one value added service;
the apparatus preferably further comprising means for determining whether the destination mobile entity is roaming to a foreign network and, if the destination mobile entity is roaming to a foreign network, means for providing routing information in response to the request for routing the message to a component in the base network.

7. A method of processing a message in a base network associated with a destination mobile entity, wherein the destination mobile entity is capable of roaming in a foreign network, the method comprising:
receiving a redirected message destined for the destination mobile entity;
performing at least one function for the message selected from a charging function and a value added service function;
forwarding the message to the destination mobile entity.

8. A method according to any of Claims 1-4 or Claim 7 wherein the at least one value added service comprises at least one of:
selectively forwarding the message to a defined destination other than the destination message entity;
selectively copying the message to one or more defined destinations;
generating and sending an automated response message to the originator of the message;
preventing the delivery of a predetermined type of message, a message from a predetermined originator or a message sent during a predetermined time period;
retaining the message for delivery at a later time;
forwarding the message to each of a group of message recipients on a message distribution list;
parsing the message content;
applying a selected charging strategy for the message.

9. A method according to any of Claims 1-4, 7 or 8 further comprising terminating the message.

10. A computer program or computer program product comprising instructions for carrying out a method according to any preceding method claim.
